# EUROPEAN PATENT APPLICATION

(11) **EP 4 722 151 A1**
(43) Date of publication of application: **08.04.2026**
(21) Application number: 23939280.6
(22) Date of filing: 08.11.2023
(51) Int. Cl.: C01B 25/45, H01M 4/58

(54) **LITHIUM MANGANESE IRON PHOSPHATE POSITIVE ELECTRODE MATERIAL, AND PREPARATION METHOD THEREFOR AND USE THEREOF**

(30) Priority: 31.05.2023 CN 202310637557
(71) Applicant: Shenzhen Dynanonic Co., Ltd., Shenzhen, Guangdong 518000 (CN)
(72) Inventor: XU, Rongyi, Shenzhen, Guangdong 518000 (CN); BAO, Fucheng, Shenzhen, Guangdong 518000 (CN); KONG, Lingyong, Shenzhen, Guangdong 518000 (CN); LI, Yineng, Shenzhen, Guangdong 518000 (CN); LIANG, Shihan, Shenzhen, Guangdong 518000 (CN)
(74) Representative: Laine IP Oy
(86) International application number: PCT/CN2023/130545
(87) International publication number: WO 2024/244309

(57) **Abstract**

A lithium manganese iron phosphate cathode material, including a first lithium manganese iron phosphate particle and a second lithium manganese iron phosphate particle. A molar ratio of Mn to Fe in the first lithium manganese iron phosphate particle is greater than or equal to 1. A molar ratio of Mn to Fe in the second lithium manganese iron phosphate particle is smaller than or equal to the molar ratio of Mn to Fe in the first lithium manganese iron phosphate particle. A particle size of the first lithium manganese iron phosphate particle is smaller than or equal to a particle size of the second lithium manganese iron phosphate particle. A preparation method of the lithium manganese iron phosphate cathode material and an application thereof are provided. The first precursor, having a manganese content greater than or equal to that of iron, inhibits crystal growth during sintering, resulting in a smaller particle size. The second precursor, having a manganese to iron ratio smaller than or equal to the ratio in the first precursor, promotes crystal growth during sintering, resulting in a larger particle size. This results in a particle size grading between large particles and small particles, improves the spatial utilization of particle packing, and enhances the compaction density and volumetric capacity of the lithium manganese iron phosphate cathode material.

## Description

This application claims priority of the Chinese patent application filed with the China Patent Office on May 31, 2023 with an application number 202310637557.5 and titled "LITHIUM MANGANESE IRON PHOSPHATE CATHODE MATERIAL, PREPARATION METHOD THEREOF, AND APPLICATION THEREOF", the entire contents of which are incorporated by reference in the present application.

### TECHNICAL FIELD

The present application relates to the field of lithium battery technology, and more particularly to a lithium manganese iron phosphate cathode material, a preparation method thereof, and an application thereof.

### BACKGROUND

Lithium-ion battery cathode materials, especially the cathode active material, are crucial components of lithium-ion batteries and play a decisive role in their performance. For example, in lithium-ion batteries used in electric vehicles, the energy density of the cathode material determines the vehicle's driving range. Energy density is determined by the specific capacity and voltage of the cathode material. Existing cathode materials struggle to achieve both high energy density and low cost. For example, ternary cathode materials offer significantly higher energy densities than lithium iron phosphate cathode materials, but they are expensive. While lithium iron phosphate is inexpensive, its theoretical capacity and voltage are relatively low (170 mAh/g, 3.4V), making it difficult to meet the requirements for high battery life. As a result of the pursuit of high-voltage platforms, lithium manganese iron phosphate boasts a theoretical voltage of 4.1V and a theoretical energy density far higher than lithium manganese iron phosphate.

However, lithium manganese iron phosphate has a relatively obvious disadvantage. The lithium manganese iron phosphate cathode material prepared by conventional preparation methods has a low compaction density, resulting in a low volumetric capacity of the cathode material and the battery made from the cathode material, which hinders the practical application of the material.

### TECHNICAL PROBLEMS

The purpose of the present application is to overcome the above-mentioned deficiencies of the prior art and to provide a lithium manganese iron phosphate cathode material and a preparation method thereof, so as to solve the technical problems of low compaction density and low volume specific capacity of the existing lithium manganese iron phosphate cathode material.

### TECHNICAL SOLUTIONS

To achieve the above-mentioned objectives of the present application, a first aspect of the present application provides a lithium manganese iron phosphate cathode material. The lithium manganese iron phosphate cathode material of the present application includes: a first lithium manganese iron phosphate particle and a second lithium manganese iron phosphate particle. In the first lithium manganese iron phosphate particle, a molar ratio of Mn to Fe is greater than or equal to 1. In the second lithium manganese iron phosphate particle, a molar ratio of Mn to Fe is smaller than or equal to the molar ratio of Mn to Fe in the first lithium manganese iron phosphate particle.

Optionally, in the lithium manganese iron phosphate cathode material, Mn accounts for 30% to 70% of a total molar amount of the element Mn and the element Fe.

Optionally, the first lithium manganese iron phosphate particle has a general chemical formula of Liₐ₁Fe_{b1}Mn_{c1}(PO₄)_{d1}, where 0.9 ≤ a1 ≤ 1.1, 0 < b1 ≤ 0.5, 0.5 ≤ c1 < 1, and 0.9 ≤ d1 ≤ 1.1.

Optionally, in the first lithium manganese iron phosphate particle, 0.2 ≤ b1 ≤ 0.4, and 0.6 ≤ c1 ≤ 0.8.

Optionally, a1: (b1 + c1): d1 = 1-1.08: 0.95-1.05: 1.

A particle size of the first lithium manganese iron phosphate particle is smaller than a particle size of the second lithium manganese iron phosphate particle.

Optionally, the particle size of the first lithium manganese iron phosphate particle is between 20 nm and 350 nm.

Optionally, in the first lithium manganese iron phosphate particle, a molar ratio of the doping element M to element phosphorus contained in the first lithium manganese iron phosphate particle is greater than 0 and smaller than or equal to 0.4: 1.

Optionally, in the second lithium manganese iron phosphate particle, a molar ratio of Mn to Fe is smaller than or equal to 1.

Optionally, the second lithium manganese iron phosphate particle has a general chemical formula of Liₐ₂Fe_{b2}Mn_{c2}(PO₄)_{d2}, where 0.9 ≤ a2 ≤ 1.1, 0.4 ≤ b2 < 1, 0 < c2 ≤ 0.6, and 1 ≤ d2 ≤ 1.1.

Optionally, in the second lithium manganese iron phosphate particle, 0.5 ≤ b2 ≤ 0.8, and 0.2 ≤ c2 ≤ 0.5.

Optionally, a2: (b2+c2): d2 = 1-1.08: 0.95-1.05: 1.

Optionally, the second lithium manganese iron phosphate particle have a particle size of 300 nm to 800 nm.

Optionally, a mass ratio of the first lithium manganese iron phosphate particle to the second lithium manganese iron phosphate particle is 10: 90 to 70: 30.

Optionally, at least one of the first lithium manganese iron phosphate particle and the second lithium manganese iron phosphate particle further includes a doping element M.

Optionally, in the second lithium manganese iron phosphate particle, a molar ratio of the doping element M to element phosphorus contained in the second lithium manganese iron phosphate particle is greater than 0 and smaller than or equal to 0.4: 1.

Optionally, the doping element M includes at least one of Ti, V, Cr, Co, Ni, Ca, Nb, Mg, Zr, In, Na, Al, Cd, and Sn.

Optionally, a first coating layer and a second coating layer are further included. The first coating layer is coated on the first lithium manganese iron phosphate particle, and the second coating layer is coated on the second lithium manganese iron phosphate particle.

Optionally, a thickness of the first coating layer and a thickness of the second coating layer are the same or different, and range from 1 nm to 10 nm, respectively.

Optionally, at least one of the first and second coating layers includes carbon.

Optionally, a mass of carbon accounts for 1% to 3% by mass of the lithium manganese iron phosphate cathode material.

Optionally, a hybridization mode of carbon includes at least one of SP2 hybridization and SP3 hybridization.

Optionally, the hybridization mode of carbon in the first coating layer or the second coating layer includes the SP2 hybridization and the SP3 hybridization, and a molar ratio of a SP2-hybridized carbon to a SP3-hybridized carbon is greater than 0 and smaller than or equal to 5: 1.

Optionally, a material of at least one of the first coating layer and the second coating layer further includes a doping element N.

Optionally, the doping element N includes at least one of Ti, V, Cr, Co, Ni, Ca, Nb, Mg, Zr, In, Na, Al, Cd, and Sn.

Optionally, a content of the doping element N in the first coating layer or the second coating layer is 0.01% to 4%.

A second aspect of the present application provides a preparation method of the lithium manganese iron phosphate cathode material of the present application. The preparation method of the lithium manganese iron phosphate cathode material of the present application includes the following steps:
subjecting a first lithium manganese iron phosphate precursor particle and a second lithium manganese iron phosphate precursor particle to a first mixing treatment to obtain a first mixture precursor; and
subjecting the first mixture precursor to a first sintering treatment in a first protective gas atmosphere to obtain a first sintered product, where the first sintered product includes a first lithium manganese iron phosphate particle and a second lithium manganese iron phosphate particle.

A molar ratio of Mn to Fe in the first lithium manganese iron phosphate precursor particle is greater than or equal to 1.

A molar ratio of Mn to Fe in the second lithium manganese iron phosphate precursor particle is smaller than or equal to the molar ratio of Mn to Fe in the first lithium manganese iron phosphate precursor particle.

A particle size of the first lithium manganese iron phosphate particle is smaller than or equal to a particle size of the second lithium manganese iron phosphate particle.

Optionally, the preparation method of the first lithium manganese iron phosphate precursor particle includes the following steps:
preparing a first mixed solution including a first lithium source, a first manganese source, a first iron source, and a first phosphate source, and adding a first carbon source for precipitation to obtain the first lithium manganese iron phosphate precursor particle.

Optionally, in the step of preparing the first mixed solution, the first lithium source, the first manganese source, the first iron source, and the first phosphate source are added in a molar ratio of Li contained in the first lithium source: a sum of Mn contained in the first manganese source and Fe contained in the first iron source: P contained in the first phosphate source, that is, Li: (Mn + Fe): P being 1-1.08: 0.95-1.05: 1.

Optionally, the first carbon source is added according to a content of the first carbon source accounting for 1% to 12% of a theoretical mass of the first lithium manganese iron phosphate particle.

Optionally, the first carbon source includes at least one of a polyethylene glycol, hexadecyltrimethylammonium bromide, ethylene glycol, a polyvinyl pyrrolidone, triethanolamine, salicylic acid, ethanol, methanol, citric acid, glucose, sucrose, a soluble starch, oxalic acid, tartaric acid, fatty acid glyceride, and an amino acid.

Optionally, the preparation method of the second lithium manganese iron phosphate precursor particle includes the following steps:
preparing a second mixed solution including a second lithium source, a second manganese source, a second iron source, and a second phosphate source, and adding a second carbon source for precipitation to obtain the second lithium manganese iron phosphate precursor particle.

Optionally, the second carbon source is added according to a content of the second carbon source accounting for 1% to 12% of a theoretical mass of the second lithium manganese iron phosphate particle.

Optionally, in at least one of the step of preparing the first mixed solution and the step of preparing the second mixed solution, at least one of a source of doping element M and an additive is further added.

Optionally, the additive includes at least one of polyethylene glycol, hexadecyltrimethylammonium bromide, ethylene glycol, and ethylenediaminetetraacetic acid.

Optionally, in the step of preparing the first mixed solution, the source of doping element M is added according to a molar ratio of a doping element M to element P contained in the first phosphate source being greater than 0 and smaller than or equal to 0.4: 1.

Optionally, in the step of preparing the first mixed solution, the additive is added according to a content of the additive accounting for 1% to 20% of the theoretical mass of the first lithium manganese iron phosphate particle.

Optionally, in the step of preparing the second mixed solution, the source of doping element M is added according to a molar ratio of the doping element M to element P contained in the second phosphate source being greater than 0 and smaller than or equal to 0.4: 1.

Optionally, in the step of preparing the second mixed solution, the additive is added according to a content of the additive accounting for 1% to 20% of the theoretical mass of the second lithium manganese iron phosphate particle.

Optionally, the first protective gas includes at least one of N₂, Ar, methane, and ethanol.

Optionally, the first sintering treatment includes at least one of the following conditions (1) to (3):
(1) a first sintering treatment temperature is 200°C to 750°C;
(2) a temperature is increased to the first sintering treatment temperature at a heating rate of 1°C/min to 10°C/min; and
(3) a holding time of the first sintering treatment temperature is 10 hrs to 25 hrs.

Optionally, after the first sintering treatment, the preparation method further includes the following steps:
subjecting the first sintered product and a third carbon source to a second mixing treatment to obtain a second mixture precursor; and
subjecting the second mixture precursor to a second sintering treatment in a second protective gas atmosphere.

Optionally, the third carbon source includes at least one of a polyethylene glycol, hexadecyltrimethylammonium bromide, ethylene glycol, a polyvinyl pyrrolidone, triethanolamine, salicylic acid, ethanol, methanol, citric acid, glucose, sucrose, a soluble starch, oxalic acid, tartaric acid, fatty acid glyceride, and an amino acid.

Optionally, the third carbon source is subjected to the second mixing treatment according to a mass ratio of the third carbon source to the first sintered product of 1: 99 to 15: 85.

Optionally, the second protective gas includes at least one of N₂, Ar, methane, and ethanol.

Optionally, in the second mixing treatment step, a source of doping element N is further added to the first sintered product and the third carbon source

Optionally, the second sintering treatment includes at least one of the following conditions (1) to (3):
(1) a second sintering treatment temperature is 500°C to 800°C;
(2) a temperature is raised to the second sintering treatment temperature at a heating rate of 1°C/min to 10°C/min; and
(3) a holding time of the second sintering treatment temperature is 10 hrs to 25 hrs.

Optionally, the source of doping element N is added according to a mass ratio of the source of doping element N to the first sintered product of 0.01% to 5%.

A third aspect of the present application provides a cathode plate. The cathode plate includes: a current collector, and a cathode active layer bonded to the current collector. The cathode active material contained in the cathode active layer includes the lithium manganese iron phosphate cathode material of the present application or the lithium manganese iron phosphate cathode material prepared by the preparation method of the present application.

A fourth aspect of the present application provides a secondary battery. The secondary battery of the present application includes a cathode plate and an anode plate. The cathode plate includes the cathode plate of the present application.

Compared with the prior art, the present application has the following technical effects:
The lithium manganese iron phosphate cathode material provided by the present application includes first and second lithium manganese iron phosphate particle having different manganese and iron ratios. The particle size of the first lithium manganese iron phosphate particle is smaller than or equal to the particle size of the second lithium manganese iron phosphate particle. The manganese content in the first lithium manganese iron phosphate particle is greater than or equal to the iron content, resulting in a smaller particle size. The ratio of manganese content to iron content in the second lithium manganese iron phosphate particle is smaller than or equal to the ratio in the first lithium manganese iron phosphate particle, resulting in a larger particle size. In this way, particle size grading between large particles and small particles is formed in the lithium manganese iron phosphate cathode material including the first and second lithium manganese iron phosphate particle, which improves the spatial utilization of the particle stacking, improves the compaction density of the lithium manganese iron phosphate cathode material of the present application, and improves the volumetric capacity.

In the preparation method of the lithium manganese iron phosphate cathode material provided by the present application, a first lithium manganese iron phosphate precursor particle and a second lithium manganese iron phosphate precursor particle with different manganese and iron ratios are firstly mixed, and then subjected to a first sintering treatment to produce the lithium manganese iron phosphate cathode material having two particle sizes. During the first sintering treatment, the first lithium manganese iron phosphate precursor particle, because the molar content of manganese is greater than or equal to the molar content of iron, inhibit crystal growth, resulting in first lithium manganese iron phosphate particle with a relatively smaller particle size. The second lithium manganese iron phosphate precursor particle, because the ratio of the molar content of manganese to the molar content of iron is smaller than or equal to the ratio in the first lithium manganese iron phosphate precursor particle, facilitate crystal growth, resulting in second lithium manganese iron phosphate particle with a relatively larger particle size. In this way, particle size grading between large particles and small particles is formed, which is beneficial for improving the compaction density and volumetric capacity of the lithium manganese iron phosphate cathode material. This preparation method is process-controllable, and the prepared lithium manganese iron phosphate cathode material has stable properties.

Due that the active material of the cathode plate includes the above lithium manganese iron phosphate cathode material, the cathode plate of the present application has a higher capacity at the same volume compared to cathode plates made with lithium manganese iron phosphate materials in the prior art.

Due to the inclusion of the above cathode plate of the present application, the secondary battery of the present application has a higher capacity at the same volume compared to secondary batteries made with lithium manganese iron phosphate cathode plates in the prior art.

### DESCRIPTION OF THE DRAWINGS

In order to more clearly illustrate the specific implementation of the present application or the technical solution in the prior art, the drawings required to be used in the specific implementation or prior art description will be briefly introduced below. Obviously, the drawings in the following description are some implementations of the present application. For those skilled in the art, other drawings can also be obtained based on these drawings without creative work.
FIG. 1 is a structural schematic diagram of a first lithium manganese iron phosphate particle and a second lithium manganese iron phosphate particle of the present application;
FIG. 2 is a structural schematic diagram of a first lithium manganese iron phosphate particle and a second lithium manganese iron phosphate particle of the present application, both of which are coated with coating layers, respectively;
FIG. 3 is an SEM image and particle size distribution diagram of particle contained in the lithium manganese iron phosphate cathode material provided in Example A10 of the present application; in which, in FIG. 3:
   Part (a) is an SEM image of the first lithium manganese iron phosphate particle in Example A10 of the present application;
   Part (b) is a particle size distribution diagram of the first lithium manganese iron phosphate particle in Example A10 of the present application;
   Part (c) is an SEM image of the second lithium manganese iron phosphate particle in Example A10 of the present application; and
   Part (d) is a particle size distribution diagram of the second lithium manganese iron phosphate particle in Example A10 of the present application; and

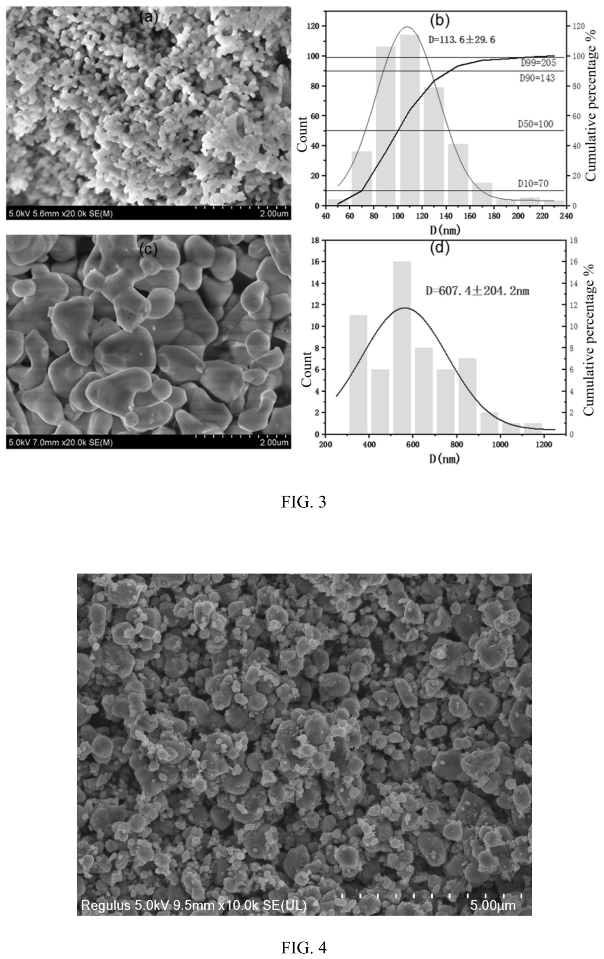

FIG. 4 is an SEM image of the lithium manganese iron phosphate cathode material provided in Example A1 of the present application;
The following reference numerals are adopted: 1 - First lithium manganese iron phosphate particle; 2 - First coating layer; 3 - Second lithium manganese iron phosphate particle; and 4 - Second coating layer.

### DETAILED DESCRIPTION OF THE EMBODIMENTS

To clarify the technical problems to be solved by the present application, technical solutions and beneficial effects, the present application is described in detail in conjunction with the embodiments below. It should be understood that the specific embodiments described herein are only used to explain the present application and are not used to limit the present application.

In the present application, the term "and/or" describes the association relationship of associated objects, indicating that there may be three relationships, for example, A and/or B, which may mean the following conditions: A exists alone, A and B exist simultaneously, and B exists alone. Among them, A and B can be singular or plural. The character "/" generally indicates that the contextual objects have an "or" relationship.

In the present application, "at least one" means one or more, and "multiple" means two or more. "At least one of the following" or similar expressions refers to any combination of these items, including any combination of single or plural items. For example, "at least one of a, b, or c", or "at least one of a, b, and c" can mean: a, b, c, a-b (that is, a and b), a-c, b-c, or a-b-c, in which, a, b, and c can be singular or plural

It should be understood that in various embodiments of the present application, the sequence numbers of the above processes do not mean the order of execution, and some or all steps may be executed in parallel or sequentially, and the execution order of each process shall be determined based on its functions and internal logic and should not constitute any limitation to the implementation process of the embodiments of the present application.

Terms used in the embodiments of the present application are only for the purpose of describing specific embodiments, and are not intended to limit the present application. The singular forms "a", "said" and "the" used in the embodiments of the present application and the appended claims are also intended to include plural forms unless otherwise clearly indicated in the context.

The masses of the relevant components mentioned of the embodiments of the present application in the specification can not only refer to the specific contents of the component, but also represent the proportional relationship between the masses of the different components. The scaling up or down of the content of the fraction is within the scope disclosed the embodiments of the present application in the specification. Specifically, the mass described the embodiments of the present application in the specification may be µg, mg, g, kg and other well-known mass units in the chemical industry.

The terms "first" and "second" are used solely for descriptive purposes to distinguish objects, such as substances, from one another and should not be understood to indicate or imply relative importance or to implicitly specify the quantity of the technical features being referred to. For example, without departing from the scope of the embodiments of the present application, a first XX may also be referred to as a second XX, and similarly, a second XX may also be referred to as a first XX. Thus, features defined as "first" or "second" may explicitly or implicitly comprise one or more of such features.

In a first aspect, embodiments of the present application provide a lithium manganese iron phosphate cathode material. This lithium manganese iron phosphate cathode material includes: a first lithium manganese iron phosphate particle 1, and a second lithium manganese iron phosphate particle 3.

A molar ratio of Mn to Fe in the first lithium manganese iron phosphate particle 1 is greater than or equal to 1. A molar ratio of Mn to Fe in the second lithium manganese iron phosphate particle 3 is smaller than or equal to the molar ratio of Mn to Fe in the first lithium manganese iron phosphate particle 1. A particle size of the first lithium manganese iron phosphate particle 1 is smaller than or equal to a particle size of the second lithium manganese iron phosphate particle 3.

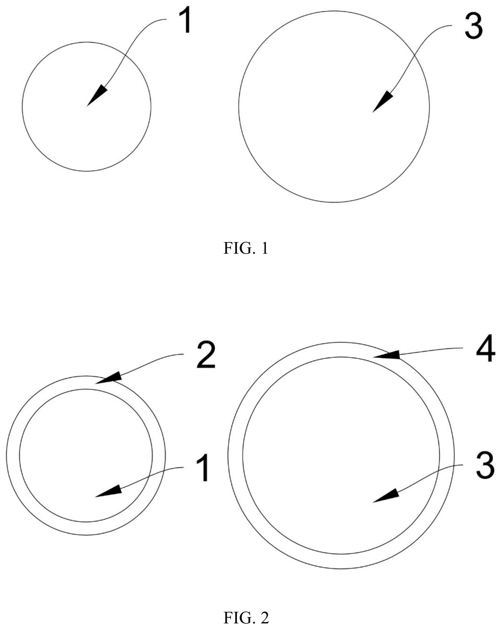

The lithium manganese iron phosphate cathode material provided in the embodiments of the present application includes a first lithium manganese iron phosphate particle 1 (hereinafter referred to as the first particle 1) and a second lithium manganese iron phosphate particle 3 (hereinafter referred to as the second particle 3) with different manganese and iron ratios. As shown in FIG. 1, the particle size of the first particle 1 is smaller than the particle size of the second particle 3. The particle size here refers to the actual particle size. Comparing the first particle 1 with the second particle 3, the manganese content in the first particle 1 is greater than or equal to the iron content, and the particle size of the particle is relatively small. The manganese-iron molar ratio in the second particle 3 is smaller than or equal to the manganese-iron molar ratio in the first particle 1, and the particle size of the particle is relatively large. In this way, particle size grading between large particles and small particles is formed in the lithium manganese iron phosphate cathode material including the first particle 1 and the second particle 3, which improves the spatial utilization of the particle stacking, improves the compaction density of the lithium manganese iron phosphate cathode material of the embodiments of the present application, and improves the volumetric capacity.

In some embodiments, a general chemical formula of the first particle 1 may be Liₐ₁Fe_{b1}Mn_{c1}(PO₄)_{d1}, where 0.9 ≤ a1 ≤ 1.1, 0 < b1 ≤ 0.5, 0.5 ≤ c1 < 1, and 1 ≤ d1 ≤ 1.1. In some embodiments, a1: (b1+c1): d1 = 1-1.08: 0.95-1.05: 1. A molar content of manganese in the first particle 1 is greater than or equal to a molar content of iron, and the molar contents of iron and manganese are further controlled within the above range. This can further reduce the particle size of the first particle 1 relative to the particle size of the second particle 3, thereby making the first particle 1 and the second particle 3 better form the particle size grading between large particles and small particles, thereby increasing the compaction density of the lithium manganese iron phosphate cathode material of the embodiments of the present application and improving the volumetric capacity. In a further exemplary embodiment, the value of b1 may include, but is not limited to, 0.05, 0.1, 0.2, 0.3, 0.4, and 0.5; the value of c1 may include, but is not limited to, 0.5, 0.6, 0.7, 0.8, 0.9, and 0.95. In a further exemplary embodiment, a value range of b1 may be 0.2 ≤ b1 ≤ 0.4, and a value range of c1 may be 0.6 ≤ c1 ≤ 0.8, so as to further improve the compaction density and volumetric capacity.

In some embodiments, the molar ratio of Mn to Fe in the second particle 3 can be smaller than or equal to 1, ensuring that the molar ratio of Mn to Fe in the second particle 3 is always smaller than or equal to that in the first particle 1. This further increases the particle size of the second particle 3 relative to that of the first particle 1, resulting in a better gradation and improved compaction density and volumetric capacity of the material.

In some embodiments, the general chemical formula of the second particle 3 can be Liₐ₂Fe_{b2}Mn_{c2}(PO₄)_{d2}, where 0.9 ≤ a2 ≤ 1.1, 0.4 ≤ b2<1, 0<c2 ≤ 0.6, and 1 ≤ d2 ≤ 1.1. In some embodiments, a2: (b2+c2): d2 = 1-1.08: 0.95-1.05: 1. The molar ratio of manganese to iron in the second particle 3 is smaller than or equal to the molar ratio of manganese to iron in the first particle 1, and the molar contents of iron and manganese are further controlled within the above ranges, so that the particle size of the second particle 3 is larger than that of the first particle 1, making the second particle 3 and the first particle 1 better form particle size grading between large particles and small particles, thereby improving the compaction density of the lithium manganese iron phosphate cathode material of the embodiments of the present application and improving the volumetric capacity. In a further exemplary embodiment, the value of b2 may include, but is not limited to, 0.4, 0.5, 0.6, 0.7, 0.8, 0.9, and 0.95. The value of c2 may include, but is not limited to, 0.05, 0.1, 0.2, 0.3, 0.4, 0.5, and 0.6. In a further exemplary embodiment, the value range of b2 may be 0.5 ≤ b2 ≤ 0.8, and the value range of c2 may be 0.2 ≤ c2 ≤ 0.5, so as to further improve the compaction density and volumetric capacity.

In the lithium manganese iron phosphate cathode material of the embodiments of the present application, the element Mn can account for 30% to 70% of the total molar amount of the element Mn and the element Fe, that is, (c1+c2)/(b1+c1+b2+c2) is 0.3 to 0.7. By controlling the molar proportion of the element manganese in the sum of the element manganese and the element iron in the entire lithium manganese iron phosphate cathode material to be within this range, it is conducive to forming a better particle size gradation between the first particle 1 and the second particle 3, and improving the compaction density and volume specific capacity of the material. In the exemplary embodiment, the proportion can be 30%, 35%, 40%, 45%, 50%, 55%, 60%, 65%, and 70%.

It should be noted that a1, b1, c1, d1, a2, b2, c2, and d2 in the above general chemical formula should be understood as the molar ratios of the corresponding elements in the material, and not from the perspective of chemical formula stoichiometry.

In some embodiments, a mass ratio of the first particle 1 to the second particle 3 is between 10: 90 and 70: 30. Controlling the mass ratio of the first particle 1 to the second particle 3 within this range can achieve an optimized particle size grading between the first particle 1 with smaller particle sizes and the second particle 3 with larger particle sizes, improving the spatial utilization of particle packing, and further increasing the compaction density and volumetric capacity of the lithium manganese iron phosphate cathode material of the present application. In an exemplary embodiment, this mass ratio may include, but is not limited to, 10: 90, 20: 80, 40: 60, 60: 40, and 70: 30.

In some embodiments, the particle size of the first particle 1 can be 20 nm to 350 nm. In some embodiments, the particle size of the second particle 3 can be 300 nm to 800 nm, where the particle size refers to the actual particle size. Controlling the particle size of the first particle 1 or the second particle 3 within these ranges can make the particle size of the first particle 1 and the second particle 3 more compatible, improve the particle size grading effect between large and small particles, further improve the compaction density of the lithium manganese iron phosphate cathode material of the embodiments of the present application, and improve the volumetric capacity. In the exemplary embodiment, the particle size of the first particle 1 may include, but is not limited to, 20 nm, 80 nm, 120 nm, 200 nm, 300 nm, and 350 nm; and the particle size of the second particle 3 may include, but is not limited to, 300 nm, 400 nm, 500 nm, 600 nm, 700 nm, and 800 nm.

In some embodiments, at least one of the first particle 1 and the second particle 3 further includes a doping element M; in the first particle 1, the molar ratio of the doping element M to phosphorus contained in the first particle 1 is greater than 0 and smaller than or equal to 0.4: 1; and in the second particle 3, the molar ratio of the doping element M to phosphorus contained in the second particle 3 is greater than 0 and smaller than or equal to 0.4: 1. By doping the doping element M into the lithium manganese iron phosphate cathode material, the lithium manganese iron phosphate cathode material can be further modified, the structural stability of the first particle 1 and the second particle 3 and the cycling stability of the material can be improved, which is conducive to the lithium manganese iron phosphate cathode material of the embodiments of the present application to exhibit the excellent performance of compaction density and volumetric capacity described above. In addition, the doping element M can also improve the electrochemical performance of the lithium manganese iron phosphate cathode material of the embodiments of the present application, making it more suitable for use in cathode materials and lithium batteries. The doping element M can be doped into the first particle 1 and/or the second particle 3. The doping amount of the doping element M in the first particle 1 or the second particle 3 can be independently doped with phosphorus contained in the first particle 1 or the second particle 3 in a certain molar ratio. In an exemplary embodiment, the molar ratio may include, but is not limited to, 0.05: 1, 0.1: 1, 0.2: 1, 0.3: 1, and 0.4: 1.

In some embodiments, the doping element M may include at least one of Ti, V, Cr, Co, Ni, Ca, Nb, Mg, Zr, In, Na, Al, Cd, and Sn. These doping elements M have a more effective modification effect on the lithium manganese iron phosphate cathode material, which further improves the structural stability, cycling stability, and electrochemical performance of the lithium manganese iron phosphate cathode material.

As shown in FIG. 2, in some embodiments, the lithium manganese iron phosphate cathode material of the present application may further include a first coating layer 2 and a second coating layer 4. The first coating layer 2 is coated on the first particle 1, and the second coating layer 4 is coated on the second particle 3. The coating layer is provided and coated on the lithium manganese iron phosphate particle to form a core-shell structure (for the sake of convenience, the first coating layer 2 coating the first particle 1 as a whole is referred to as a first core-shell, and the second coating layer 4 coating the second particle 3 as a whole is referred to as a second core-shell). Such core-shell structures can realize coating modification of the first particle 1 and the second particle 3, thereby improving the structural stability of the first particle 1 and the second particle 3. In addition, the first coating layer 2 or the second coating layer 4 can modify the surface of the first particle 1 or the second particle 3, improve the surface morphology of the lithium manganese iron phosphate cathode material, so that the gaps between the large particles can better accommodate small particles, which is more conducive to the formation of grading of particles with different particle sizes, thereby further improving the compaction density and volumetric capacity of the lithium manganese iron phosphate cathode material of the embodiments of the present application; in addition, according to the materials of the first coating layer 2 and the second coating layer 4, the electronic conductivity, the ionic conductivity, and other properties of the lithium manganese iron phosphate cathode material of the embodiments of the present application can also be improved, thus being better applicable to cathode materials and lithium batteries.

In some embodiments, a thickness of the first coating layer 2 and a thickness of the second coating layer 4 can be the same or different, ranging from 1 nm to 10 nm. Controlling the thickness of the first coating layer 2 and the second coating layer 4 can improve the stability of the first particle 1 or the second particle 3, modify the surface of the first particle 1 or the second particle 3, and further improve the compaction density and volumetric capacity of the lithium manganese iron phosphate cathode material of the embodiments of the present application; it can also improve the coating modification effect of the coating layer, such as the electronic conductivity, the ionic conductivity, and other properties. In an exemplary embodiment, the thickness of the first coating layer 2 or the second coating layer 4 may include, but is not limited to, 1 nm, 3 nm, 5 nm, 7 nm, and 10 nm.

In some embodiments, the material of at least one of the first coating layer 2 and the second coating layer 4 may include carbon. Carbon as a coating material can improve the structural stability and cycling stability of the lithium manganese iron phosphate cathode material of the embodiments of the present application, modify the surface of the first particle 1 or the second particle 3, further increasing the compaction density and volumetric capacity of the lithium manganese iron phosphate cathode material of the embodiments of the present application, and also improve the electronic conductivity of the material. In some embodiments, a mass of carbon accounts for 1% to 3% by mass of the lithium manganese iron phosphate cathode material. This can be understood as the total mass of carbon in the first coating layer 2 and the second coating layer 4 accounting for 1% to 3% of the total mass of the lithium manganese iron phosphate cathode material; it can be also understood as that the carbon in the first coating layer 2 may account for 1% to 3% of the total mass of the first coating layer 2 and the first particle 1, or the carbon in the second coating layer 4 may account for 1% to 3% of the total mass of the second coating layer 4 and the second particle 3. Controlling the mass percentage of carbon can further enhance these beneficial effects. In an exemplary embodiment, this mass percentage may include, but is not limited to, 1%, 1.5%, 2%, 2.5%, and 3%.

In some embodiments, a hybridization mode of carbon includes at least one of SP2 hybridization and SP3 hybridization.

The hybridization pattern of interconnected carbon atoms in the coating layer is closely related to the material's compaction density, volumetric capacity, and other properties. The SP2-hybridized carbon is beneficial for improving the coating effect, enhancing structural stability, increasing conductivity, and reducing resistivity. However, excessive content of the SP2-hybridized carbon in the coating layer can slightly hinder de-intercalation of the lithium ions, reducing the capacity utilization. Conversely, SP3-hybridized carbon is beneficial for improving the material's capacity, but excessive content in the coating layer can affect the material's structural stability.

In some embodiments, the carbon hybridization in the first coating layer 2 or the second coating layer 4 includes SP2 and SP3 hybridization, and a molar ratio of a SP2-hybridized carbon to a SP3-hybridized carbon is greater than 0 and smaller than or equal to 5: 1. Controlling the ratio of SP2 and SP3 hybridization of interconnected carbon atoms can further improve the structural stability of the material, while increasing the compaction density and volumetric capacity, and balancing these properties. In an exemplary embodiment, the molar ratio may include, but is not limited to, 0.5: 1, 1: 1, 2: 1, 3: 1, 4: 1, and 5: 1.

In some embodiments, a material of at least one of the first coating layer 2 and the second coating layer 4 may further include a doping element N. Doping the doping element N into the coating layer can further improve the coating layer performance, enhance the stability of the lithium manganese iron phosphate cathode material of the embodiments of the present application, modify the particle surface morphology, increase the compaction density and volumetric capacity, and further improve the electronic conductivity of the lithium manganese iron phosphate cathode material of the embodiments of the present application. When the coating layer material contains carbon, the element N may exist in the form of a carbide in the carbon coating layer. In some embodiments, the doping element N may include at least one of Ti, V, Cr, Co, Ni, Ca, Nb, Mg, Zr, In, Na, Al, Cd, and Sn. The content of the doping element N in the first coating layer 2 or the second coating layer 4 may be 0.01% to 4%. In an exemplary embodiment, the above content may include, but is not limited to, 0.01%, 0.1%, 0.5%, 1%, and 4%. These doping elements N or the above range or their content impart to the coating layer the effect of further improving the performance of the lithium manganese iron phosphate cathode material of the embodiments of the present application.

In a second aspect, embodiments of the present application further provide a preparation method of a lithium manganese iron phosphate cathode material, including the following steps:
step S10, subjecting first lithium manganese iron phosphate precursor particle (hereinafter referred to as the first precursor) and second lithium manganese iron phosphate precursor particle (hereinafter referred to as the second precursor) to a first mixing treatment to obtain a first mixture precursor; and
step S20, subjecting the first mixture precursor to a first sintering treatment in a first protective gas atmosphere to obtain a first sintered product, the first sintered product including first particle 1 and second particle 3.

A molar content of manganese in the first precursor is greater than or equal to the molar content of iron, a molar ratio of manganese to iron in the second precursor is smaller than or equal to the molar ratio of manganese to iron in the first precursor, and a particle size of the first particle 1 is smaller than or equal to a particle size (referring to the actual particle size) of the second particle 3.

The preparation method of the embodiment of the present application includes mixing a first precursor and a second precursor with different manganese-iron ratios, and then performing a first sintering treatment to produce a lithium manganese iron phosphate cathode material including first particle 1 and second particle 3. Thus, during the first sintering treatment, the first precursor, because the molar content of manganese is greater than or equal to the molar content of iron, inhibits crystal growth, resulting in first particle 1 with a relatively small particle size. The second precursor, because the molar ratio of manganese to iron is smaller than or equal to that of the first precursor, results in larger crystal growth, resulting in second particle 3 with a relatively larger particle size. This creates a particle size grading between large particles and small particles, which is beneficial for improving the compaction density and volumetric capacity of the resulting lithium manganese iron phosphate cathode material. This preparation method is process-controllable, and the prepared lithium manganese iron phosphate cathode material has stable properties.

### Step S10:

The preparation of the first precursor or the second precursor in step S10 can be performed by a solid-phase method, a liquid-phase method, or other methods. Taking the liquid-phase method as an example, in some embodiments, step S10 may include the following steps:
Step S11, preparing a first mixed solution including a first lithium source, a first manganese source, a first iron source, and a first phosphate source, and adding a first carbon source for precipitation to obtain the first precursor; and
Step S12, preparing a second mixed solution including a second lithium source, a second manganese source, a second iron source, and a second phosphate source, and adding a second carbon source for precipitation to obtain the second precursor.

The use of the liquid-phase method to prepare the first precursor and second precursor separately allows the raw materials to be evenly mixed in the mixed solutions, forming stable and uniform solutions, which were further processed using the first carbon source and the second carbon source respectively to prepare solid precursor particles, thereby improving the consistency of the resulting precursor particles.

### Step S11:

The first lithium source may include, but is not limited to, at least one of lithium carbonate, lithium oxalate, lithium hydroxide, and lithium acetate. The first manganese source may include, but is not limited to, at least one of manganese chloride, manganese nitrate, and manganese sulfate. The first iron source may include, but is not limited to, at least one of ferrous chloride, ferrous sulfate, and ferrous nitrate. The first phosphate source may include, but is not limited to, at least one of phosphoric acid, diammonium hydrogen phosphate, and ammonium dihydrogen phosphate.

In some embodiments, in the step of preparing the first mixed solution, the first lithium source, the first manganese source, the first iron source, and the first phosphate source may be added according to a molar ratio of Li contained in the first lithium source: a sum of Mn contained in the first manganese source and Fe contained in the first iron source: P contained in the first phosphate source, that is, Li: (Mn + Fe): P being 1-1.08: 0.95-1.05: 1. The content of Mn should also be greater than or equal to the content of Fe. The mixing ratio of the first manganese source and the first iron source can be further controlled by referring to the range of 0<b1 ≤ 0.5, 0.5 ≤ c1<1 in the lithium manganese iron phosphate cathode material of the above embodiment. The mixing ratio of the first manganese source and the first iron source can be further controlled by referring to the range of 0.2 ≤ b1 ≤ 0.4, 0.6 ≤ c1 ≤ 0.8. By controlling the ratio relationship within the above range, the desired first precursor can be produced, and the content of each element in the first precursor is stable. In an exemplary embodiment, the molar ratio of Li: (Mn+Fe): P may include, but is not limited to, (1 or 1.02 or 1.04 or 1.06 or 1.08): (0.95 or 0.98 or 1 or 1.02 or 1.05): 1.

Furthermore, in the step S11 of preparing the first mixed solution, at least one of a source of doping element M and an additive may be added.
① The addition of the source of doping element M allows the first precursor to contain the doping element M, thereby allowing the first particle 1 produced after the first sintering treatment to contain the doping element M. This improves the stability of the first particle 1, enabling the first particle 1 to exhibit high compaction density and high volumetric capacity, while also further enhancing electrochemical performance. The doping element M in the source of doping element M may include, but is not limited to, at least one of Ti, V, Cr, Co, Ni, Ca, Nb, Mg, Zr, In, Na, Al, Cd, and Sn. The source of doping element M may be added according to a molar ratio of the doping element M to the element P contained in the first phosphate source is greater than 0 and smaller than or equal to 0.4: 1. These doping elements and the amount of the source of doping element M added further enhance the aforementioned properties of the subsequently produced first particle 1. In an exemplary embodiment, the molar ratio of M to P may include, but is not limited to, 0.05: 1, 0.1: 1, 0.2: 1, 0.3: 1, and 0.4: 1.
② The addition of the additive can reduce particle agglomeration during the liquid-phase preparation of the first precursor and improve particle sphericity. The subsequent first sintering treatment results in first particle 1 with uniform particle size distribution and enhanced surface morphology, further improving the compaction density and volumetric capacity of the resulting lithium manganese iron phosphate cathode material. Furthermore, the additives can be organic and can further form a carbon layer to enhance the coating modification effect. The additive may include at least one of polyethylene glycol (PEG), hexadecyltrimethylammonium bromide (CATB), ethylene glycol (EG), and ethylenediaminetetraacetic acid (EDTA). The additive may be added according to a content of the additive accounting for 1% to 20% of a theoretical mass of the first particle 1. The theoretical mass refers to the calculated mass of the target product (e.g., the first particle 1 in this example). These additives or their addition amounts can further enhance the performance of the additives during the preparation of the first precursor, improving the compaction density, volumetric capacity, and electrochemical performance of the resulting lithium manganese iron phosphate cathode material. In an exemplary embodiment, the above percentages may be 1%, 5%, 10%, 15%, and 20%.

The first carbon source may include, but is not limited to, at least one of a polyethylene glycol, hexadecyltrimethylammonium bromide, ethylene glycol, a polyvinyl pyrrolidone, triethanolamine, salicylic acid, ethanol, methanol, citric acid, glucose, sucrose, a soluble starch, oxalic acid, tartaric acid, fatty acid glyceride, and an amino acid. The first carbon source plays the role of dispersion, precipitation, and reduction. It can be used in a liquid-phase method to precipitate the relevant solutes in the first mixed solution to obtain a solid first precursor for subsequent sintering. The first carbon source, as an organic matter, can form a carbon coating layer during the subsequent sintering to further improve the above-mentioned structural stability, cycling stability, compaction density, volumetric capacity, electrochemical performance, and other properties of the prepared lithium manganese iron phosphate cathode material. The addition amount of the first carbon source may account for 1% to 12% of a theoretical mass of the first particle 1. In an exemplary embodiment, the addition amount can be 1%, 5%, 8%, and 12%.

Finally, in the step of preparing the first mixed solution, the order of adding the source of doping element M, the additive, and the first carbon source can be as follows: after all other raw materials are added to form a stable mixed solution, the first carbon source is added thereto. The above is only an example of adding the first carbon source. If it is desired to ultimately produce a lithium manganese iron phosphate cathode material with particle having no coating layer, especially no carbon coating layer, other precipitation methods (such as heat precipitation) may be used, or the first precursor may be subjected to impurity removal treatment.

### Step S12:

The preparation of the second precursor in step S12 may be similar to the preparation of the first precursor in step S11 above. The only difference is that when preparing the second mixed solution, a ratio of the second manganese source to the second iron source, based on the molar ratio of the element Mn in the second manganese source to the element Fe in the second iron source, should be smaller than or equal to the ratio of manganese to iron in the first precursor, which is required to achieve the desired second precursor. The ratio of the second manganese source to the second iron source can be further controlled by referring to the range of 0.4 ≤ b2<1, 0<c2 ≤ 0.6 in the lithium manganese iron phosphate cathode material described in the previous embodiment. The mixing ratio of the second manganese source to the second iron source can be further controlled by referring to the range of 0.5 ≤ b2 ≤ 0.8, 0.2 ≤ c2 ≤ 0.5. The types and proportions of other raw materials, the types and proportions of the source of doping element M, the types and proportions of the first carbon source, and the types and proportions of additives can all refer to, but not limited to, those in step S11, and the similar beneficial effects can be achieved.

The first precursor prepared in step S11 and the second precursor prepared in step S12 can be further crushed to achieve particle size control for optimal performance in the subsequent first sintering treatment. This particle size control can be performed on both precursors independently before the first mixing treatment, or on the first mixture precursor after the first mixing treatment.

### Step S20:

Step S20 involves subjecting the first mixture precursor to the first sintering treatment to obtain the first sintered product. During the first sintering treatment, the first precursor, due that the molar content of manganese is greater than or equal to the molar content of iron, inhibits crystal growth and produces first particle 1 with a relatively small particle size. The second precursor, due that a molar ratio of manganese to iron thereof is smaller than or equal to that in the first precursor, grows at a higher rate than the first precursor, facilitating crystal growth and therefore producing second particle 3 with a relatively large particle size. In this way, a particle size grading between large particles and small particles is formed, which is conducive to improving the compaction density and volumetric capacity of the resulting lithium manganese iron phosphate cathode material.

In some embodiments, the first protective gas may include at least one of N₂, Ar, methane, and ethanol. If a lithium manganese iron phosphate cathode material without a coating layer is desired, the first protective gas may not include methane or ethanol (both in gaseous form). If a lithium manganese iron phosphate cathode material with a coating layer is desired, methane and ethanol may be further included. By controlling parameters such as the gas flow rate and gas content, the thickness of the coating layer can be further adjusted to further enhance the coating modification effect of the coating layer and to adjust the ratio of SP2-hybridized carbon to SP3-hybridized carbon in the coating layer.

In some embodiments, the first sintering treatment temperature may be 200°C to 750°C; and/or, the holding time may be 10 hrs to 25 hrs; and/or, the temperature may be raised to the first sintering treatment temperature at a heating rate of 1°C/min to 10°C/min. By controlling the parameters of the first sintering treatment within these ranges, the rate and degree of crystal growth of the materials in the first precursor and the second precursor during the first sintering treatment may be increased, thereby producing first particle 1 with smaller particle sizes and second particle 3 with larger particle sizes, forming particle size grading between large particles and small particles, thereby increasing the compaction density and volumetric capacity of the obtained lithium manganese iron phosphate cathode material. In addition, if the first precursor or the second precursor also includes a first carbon source or an organic additive, a carbon coating layer may be formed by the first sintering treatment to further improve the stability and electrochemical properties of the obtained material. In an exemplary embodiment, the first sintering treatment temperature may include, but is not limited to, 200°C, 250°C, 300°C, 350°C, 400°C, 450°C, 500°C, 550°C, 600°C, 650°C, 700°C, and 750°C; the holding time may include, but is not limited to, 10 hrs, 13 hrs, 16 hrs, 19 hrs, 22 hrs, and 25 hrs; and the heating rate may include, but is not limited to, 1°C/min, 3°C/min, 5°C/min, 7°C/min, 9°C/min, and 10°C/min. Furthermore, if agglomerates are present after cooling after the first sintering treatment, the first sintered product may be pulverized by jet milling to obtain a first sintered product.

In some embodiments, after the first sintering treatment, the following steps may be further performed:
step S30, subjecting the first sintered product and a third carbon source to a second mixing treatment to obtain a second mixture precursor; and
step S40, subjecting the second mixture precursor to a second sintering treatment in a second protective gas atmosphere.

Steps S30 and S40 can produce a lithium manganese iron phosphate cathode material containing a coating layer. Furthermore, the second sintering treatment can further improve the crystallinity and stability of the first sintered product, forming a core-shell structure and improving sphericity. This further enables the first particle 1 and the second particle 3 to form a more appropriate particle size grading, thereby increasing the compaction density and volumetric capacity of the lithium manganese iron phosphate cathode material.

### Step S30:

Step S30 involves subjecting the first sintered product and the third carbon source to a second mixing treatment which may be performed by ball milling to thoroughly mix the first sintered product and the third carbon source. Ball milling involves a ball size of 0.3 mm to 5 mm, including but not limited to 0.3 mm, 0.6 mm, 0.8 mm, 1 mm, 3 mm, 4 mm, and 5 mm. The ball milling process may achieve a particle size (D50) of 0.2 µm to 0.6 µm. In an exemplary embodiment, the particle size ranges from 0.2 µm to 0.5 µm and from 0.5 µm to 0.6 µm.

In some embodiments, the third carbon source can include at least one of a polyethylene glycol (PEG), hexadecyltrimethylammonium bromide (CTAB), ethylene glycol (EG), a polyvinyl pyrrolidone (PVP), triethanolamine (TEOA), salicylic acid (SA), ethanol, methanol, citric acid, glucose, sucrose, soluble starch, oxalic acid, tartaric acid, fatty acid glyceride, and an amino acid. The second mixing treatment can be performed at a mass ratio of the third carbon source to the first sintered product of 1: 99 to 15: 85. Controlling the third carbon source to these substances and the proportion of the third carbon source added can further improve the performance of the coating layer formed during the second sintering treatment, thereby further enhancing the stability, compaction density, volumetric capacity, and electrochemical properties of the resulting lithium manganese iron phosphate cathode material. In an exemplary embodiment, the mass ratio may include, but is not limited to, 1: 99, 5: 95, 10: 90, and 15: 85. Furthermore, the type and amount of the third carbon source added can also adjust the ratio of the SP2- hybridized carbon to the SP3-hybridized carbon in the coating layer of the resulting material.

In some embodiments, during the second mixing step, a source of doping element N may be added to the first sintered product and the third carbon source. The source of doping element N can cause the carbon coating layer formed in the subsequent second sintering treatment to include the doping element N, thereby further improving the structural stability, cycling stability, compaction density, volumetric capacity, and electronic conductivity of the material obtained above. The doping element N may include at least one of Ti, V, Cr, Co, Ni, Ca, Nb, Mg, Zr, In, Na, Al, Cd, and Sn. The source of doping element N may be added according to a mass ratio of the source of doping element N to the first sintered product of 0.01% to 4%.

### Step S40:

The second sintering treatment in step S40 can sinter the third carbon source into a coating layer. It can also further improve the crystallinity and stability of the first sintered product, forming a core-shell structure and enhancing sphericity. This further improves the particle size grading between the first core-shell and the second core-shell at a proper ratio, thereby increasing the compaction density and volumetric capacity of the resulting lithium manganese iron phosphate cathode material. To further enhance these effects, the second sintering treatment temperature can be 500°C to 800°C; and/or the temperature can be increased at a rate of 1°C/min to 10°C/min to the second sintering treatment temperature; and/or a holding time of the second sintering treatment temperature can be 10 hrs to 25 hrs. In an exemplary embodiment, the temperature may include, but is not limited to, 500°C, 550°C, 600°C, 650°C, 700°C, 750°C, and 800°C; the holding time may include, but is not limited to, 10 hrs, 13 hrs, 16 hrs, 19 hrs, 22 hrs, and 25 hrs; and the heating rate may include, but is not limited to, 1°C/min, 3°C/min, 5°C/min, 7°C/min, 9°C/min, and 10°C/min. The second protective gas may include at least one of N₂, Ar, methane, and ethanol. Gaseous methane and ethanol have similar effects to those in the first protective gas. By controlling parameters such as gas flow rate and content, the thickness of the coating layer can be further controlled to further enhance the coating modification effect of the coating layer and assist in adjusting the ratio of the SP2-hybridized carbon to the SP3-hybridized carbon in the coating layer. If the target product does not include a coating layer, or if control of the coating layer thickness is not required, the second protective gas may include at least one of N₂ and Ar.

The product of the second sintering treatment in step S40 can be further processed by cooling and pulverizing, etc., to achieve a particle size D50 less than 2 µm, thereby producing a lithium manganese iron phosphate cathode material with high compaction density and high volumetric capacity.

Finally, in the above embodiments, to improve preparation efficiency, steps S10 to S40 are adopted, in which, the first precursor and the second precursor are mixed, followed by the first sintering treatment, and then the second mixing treatment and the second sintering treatment to produce the lithium manganese iron phosphate cathode material. If preparation efficiency is not a concern, referring to steps S10 to S40, the first precursor and the second precursor can also be separately subjected to a first sintering treatment, and then a second mixing treatment and a second sintering treatment, respectively, to produce a first core-shell and a second core-shell, respectively. The first core-shell and the second core-shell are then mixed to produce the lithium manganese iron phosphate cathode material. Alternatively, referring to steps S10 to S20, the first precursor and the second precursor may be subjected to a first sintering treatment to obtain the first particle 1 and the second particle 3 as first sintered products, respectively. The first sintered products may then be mixed and sintered according to steps S30 to S40 to obtain a lithium manganese iron phosphate cathode material containing a first core-shell and a second core-shell. These two preparation methods also fall within the scope of the present application.

In a third aspect, embodiments of the present application also provide a cathode plate. The cathode plate of the embodiments of the present application includes: a current collector, and a cathode active layer bonded to the current collector. The cathode active layer contains the lithium manganese iron phosphate cathode material described in the above embodiments, or a lithium manganese iron phosphate cathode material prepared using the preparation method described in the above embodiments.

Due that the active material of the cathode plate includes the above lithium manganese iron phosphate cathode material, the cathode plate of the present application has a higher capacity at the same volume compared to cathode plates made with lithium manganese iron phosphate materials in the prior art.

The mass content of the lithium manganese iron phosphate cathode material of the above-mentioned embodiments of the present application in the cathode active layer can be designed based on battery performance requirements. For example, in an embodiment, the content of the lithium manganese iron phosphate cathode material of the above-mentioned embodiments of the present application in the cathode active layer can be controlled to be 85% to 95%. This content range of lithium manganese iron phosphate cathode material provides the cathode plate with higher capacity within the same volume while ensuring various performance characteristics.

In an embodiment, the cathode active layer includes, in addition to the lithium manganese iron phosphate cathode material, a binder and a conductive agent. In an embodiment, the binder can be a commonly used electrode binder, such as one or more of polyvinylidene chloride, soluble polytetrafluoroethylene, styrene-butadiene rubber, hydroxypropyl methylcellulose, methylcellulose, carboxymethyl cellulose, polyvinyl alcohol, acrylonitrile copolymer, sodium alginate, chitosan and chitosan derivatives. In an embodiment the conductive agent can be a commonly used conductive agent, such as one or more of graphite, carbon black, acetylene black, graphene, carbon fiber, C60, and carbon nanotubes. It can be understood that the cathode active layer can also contain other electrode active materials, such as one or more of lithium cobalt oxide, lithium manganese oxide, lithium iron phosphate, lithium manganese iron phosphate, lithium vanadium phosphate, lithium vanadium oxyphosphate, lithium vanadium phosphate fluorophosphate, lithium titanate, lithium nickel cobalt manganese oxide, and lithium nickel cobalt aluminum oxide.

In an embodiment, the cathode plate preparation process may include: mixing a cathode active material, a conductive agent, and a binder to obtain an electrode slurry; applying the electrode slurry to a cathode current collector; and performing drying, roll-pressing, and die-cutting to obtain the cathode plate.

In a fourth aspect, embodiments of the present application also provide a secondary battery. The secondary battery of the embodiments of the present application includes a cathode plate and an anode plate, the cathode plate includes the cathode plate described in the embodiments above.

Due to the inclusion of the above cathode plate of the embodiments of the present application, the secondary battery of the present application has a higher capacity at the same volume compared to secondary batteries made with lithium manganese iron phosphate cathode plates in the prior art.

Explanation is made hereinbelow with reference to specific examples.

### 1. Lithium Manganese Iron Phosphate Cathode Material and Preparation Method thereof

### Example A1

This example provides a lithium manganese iron phosphate cathode material, including a first particle and a second particle, both of which contain a doping element M of Ti. The first particle has a Li: Fe: Mn: Ti: PO₄ ratio of 1: 0.3: 0.695: 0.005: 1, and a particle size of 80 nm to 140 nm (actual particle size). The second particle has a Li: Fe: Mn: Ti: PO₄ ratio of 1: 0.595: 0.4: 0.005: 1, and a particle size of 400 nm to 600 nm (actual particle size). A mass ratio of the first particle to the second particle is 50: 50.

The lithium manganese iron phosphate cathode material further includes a first coating layer and a second coating layer. The first coating layer is coated on the first particle, and the second coating layer is coated on the second particle. Both the first coating layer and the second coating layer have a thickness of 5 nm, adopt the same carbon substrate material, the contained doping element N is Zr, and a molar ratio of sp2-hybridized carbon atoms to sp3-hybridized carbon atoms is 3: 1.

The lithium manganese iron phosphate cathode material of this example was prepared by the following steps:
S1: Lithium hydroxide, ferric nitrate, manganese nitrate, titanium dioxide (doping element M was Ti), and ammonium dihydrogen phosphate are completely mixed in a solvent at a molar ratio of Li: Fe: Mn: Ti: PO₄ of 1: 0.3: 0.695: 0.005: 1 to form a stable first mixed solution. PEG (additive) was added according to an amount thereof accounting for 2% of a theoretical mass of the lithium manganese iron phosphate, followed by addition of glucose (a first carbon source) according to an amount thereof accounting for 7% of the theoretical mass of the lithium manganese iron phosphate. Heat precipitation was performed to obtain a solid first precursor.

Lithium hydroxide, ferric nitrate, manganese nitrate, titanium dioxide (doping element M was Ti), and ammonium dihydrogen phosphate were completely mixed at a molar ratio of Li: Fe: Mn: Ti: PO₄ of 1: 0.595: 0.4: 0.005: 1 in a solvent to form a stable second mixed solution. PEG (additive) was added according to an amount thereof accounting for 2% of a theoretical mass of the lithium manganese iron phosphate, followed by addition of glucose (a second carbon source) according to an amount thereof accounting for 7% of the theoretical mass of the lithium manganese iron phosphate. Heat precipitation was performed to obtain a solid first precursor.

The first precursor and the second precursor were respectively crushed, and samples were taken from the first precursor and the second precursor respectively according to a mass ratio of 50: 50 and mixed to obtain a first mixture precursor.

S2. The first mixture precursor was subjected to a first sintering treatment in a nitrogen atmosphere at a sintering temperature of 600°C for 15 hrs to obtain a first sintered product.

S3. The first sintered product was completely mixed with 8% starch (a third carbon source) and 0.3% zirconium oxide (a source of doping element N) by ball milling to obtain a second mixture precursor. The mixture was ball milled to a particle size D50 of 0.2 µm to 0.5 µm.

S4. The second mixture precursor was subjected to a second sintering treatment in nitrogen atmosphere at a sintering temperature of 700°C for 15 hrs to obtain the lithium manganese iron phosphate cathode material.

### Example A2

This example provides a lithium manganese iron phosphate cathode material, which differs from the lithium manganese iron phosphate cathode material of Example A1 in that the ratio of Li: Fe: Mn: Ti: PO₄ in the first particle is 1: 0.4: 0.595: 0.005: 1, and the ratio of Li: Fe: Mn: Ti: PO₄ in the second particle is 1: 0.495: 0.5: 0.005: 1.

The preparation method of this example differs from the preparation method of Example A1 in that the amounts of manganese and iron added in step S1 were adjusted accordingly.

### Example A3

This example provides a lithium manganese iron phosphate cathode material, which differs from the lithium manganese iron phosphate cathode material of Example A1 in that the particle size of the first particle is 200 nm to 300 nm, and the particle size of the second particle is 800 nm to 1000 nm.

The preparation method of this example differs from the preparation method of Example A1 in that the ball milling process in step S3 controlled the particle size D50 of the second mixture precursor to between 0.5 µm and 0.6 µm, resulting in the particle sizes (actual particle sizes) of the first and second particles falling within the above ranges.

### Example A4

This example provides a lithium manganese iron phosphate cathode material, which differs from the lithium manganese iron phosphate cathode material of Example A1 in that the mass ratio of the first particle to the second particle was 30: 70.

The preparation method of this example differs from the preparation method of Example A1 in that in step S1, after the first precursor and the second precursor were respectively crushed, samples were taken from the first precursor and the second precursor respectively according to a mass ratio of 30: 70 (rather than 50: 50 in Example 1) and mixed to obtain a first mixture precursor.

### Example A5

This example provides a lithium manganese iron phosphate cathode material, which differs from the lithium manganese iron phosphate cathode material of Example A1 in that the first particle and the second particle do not contain the doping element Ti. The Fe: Mn ratio in the first particle is changed from 0.3: 0.695 to 0.3: 0.7, and the Fe: Mn ratio in the second particle is changed from 0.595: 0.4 to 0.6: 0.4.

The preparation method of this example differs from the preparation method of Example A1 in that step S1 did not involve the addition of titanium dioxide. Instead, the corresponding manganese nitrate was added to the first mixed solution, and the corresponding iron nitrate was added to the second mixed solution.

### Example A6

This example provides a lithium manganese iron phosphate cathode material, which differs from the lithium manganese iron phosphate cathode material of Example A1 in that the first coating layer and the second coating layer do not contain the doping element Zr.

The preparation method of this example differs from the preparation method of Example A1 in that step S3 did not involve the addition of zirconium oxide.

### Example A7

This example provides a lithium manganese iron phosphate cathode material, which differs from the lithium manganese iron phosphate cathode material of Example A1 in that the molar ratio of SP2-hybridized carbon atoms to SP3-hybridized carbon atoms is 8: 1.

The preparation method of this example differs from the preparation method of Example A1 in that, in step S3, 8% starch was added to adjust the total amount to 3% starch and 5% polyethylene glycol.

### Example A8

This example provides a lithium manganese iron phosphate cathode material, which differs from the lithium manganese iron phosphate cathode material of Example A1 in that neither a first coating layer nor a second coating layer is included.

The preparation method of this example differs from the preparation method of Example A1 in that the step S1 did not involve the addition of the first carbon source, second carbon source, and PEG additive, and the step S3 did not involve the addition of starch and calcium oxide. The ball milling process was performed only on the first sintered product.

### Example A9

This example provides a lithium manganese iron phosphate cathode material and a preparation method, which differ from Example A1 in that step S1 did not involve the addition of PEG additive.

### Example A10

This example provides a lithium manganese iron phosphate cathode material and a preparation method, which differ from Example A1 in that, in step S1, the first and second precursors, after being crushed, were respectively collected according to a mass ratio of 50: 50, but not mixed. Instead, steps S2, S3, and S4 were performed separately. The third carbon source and calcium oxide added in step S3 were added to the first sintered product of the first precursor and the second sintered product of the second precursor, respectively, with amounts of 50% and 50% of the amounts added in Example A1. Finally, a first core-shell and a second core-shell are obtained, which are then mixed to obtain a lithium manganese iron phosphate cathode material.

### Comparative Example A1

The lithium manganese iron phosphate cathode material provided in this comparative example differs from the lithium manganese iron phosphate cathode material in Example A1 in that it does not include a second core-shell structure, but only a first core-shell structure.

The preparation method differs from that in Example A1 in that step S1 did not include the step of preparing a second mixed solution, and in step S3, the amounts of the third carbon source and zirconium oxide added were changed to 50% of those in Example A1.

### Comparative Example A2

The lithium manganese iron phosphate cathode material provided in this comparative example differs from the lithium manganese iron phosphate cathode material in Example A1 in that the first core-shell structure is not included, but only the second core-shell structure is included.

The preparation method differs from that in Example A1 in that step S1 did not include the step of preparing the first mixed solution, and in step S3, the amounts of the third carbon source and zirconium oxide added were changed to 50% of those in Example A1.

### 2. Lithium-ion battery:

2.1 The lithium manganese iron phosphate cathode materials of Examples A1 to A10 and the lithium manganese iron phosphate cathode materials provided in Comparative Examples A1 to A2 were used as the cathode active materials of the lithium ion battery Examples B1 to B10 and Comparative Examples B1 to B2, and the cathode plates were prepared according to the following method:
(1) Preparation of slurry: 2.33 kg of a cathode active material, 0.012 kg of a superconducting carbon black (SP) and 0.048 kg of polyvinylidene fluoride (PVDF) as a binder were added to an agate ball mill at the same time, and then 1.6 kg of solvent N-methylpyrrolidone (NMP) was added. The slurry was prepared by ball milling at a speed of 360 r/min for 4 hrs.
(2) Coating of slurry: a scale of the scraper of the coating machine was adjusted, and the ball-milled slurry was evenly coated on an aluminum foil. The coated electrode plate was placed in a vacuum drying oven at a temperature of 130°C and baked for 3 hrs; and
(3) Rolling and punching: the aluminum foil coated with the slurry was placed flatly in the middle of the roller and the electrode plate was then rolled; the front of the rolled electrode plate was placed close to a punched area and punched in sequence; the compaction density of the electrode plate was controlled to be 2.0 g/cm³ to 2.6 g/cm³, the diameter was 14 mm, and the thickness is 0.05 mm to 0.10 mm; the punched electrode plate was placed in a vacuum drying oven at a temperature of 130°C and baked for 3 hrs.

The lithium manganese iron phosphate cathode material in the above Example A1 was used as the cathode active material contained in the battery Example B1, the lithium manganese iron phosphate cathode material in Example A2 was used as the cathode active material contained in the battery Example B2, and so on, following the same pattern, the lithium manganese iron phosphate cathode material in the comparative example A1 is used as the cathode active material contained in the battery comparative example B1, and so on, following the same pattern.

2.2 Button cells were assembled in a glove box according to an assembling order of the anode shell, spring plate, steel plate, lithium plate, separator, cathode plate, and cathode shell. During the process, 10 µL of electrolyte was injected. The button cells were then sealed using a sealing machine to obtain battery examples B1 to B10 and battery comparative examples B1 to B2.

### 3. Related Performance Testing and Results Analysis

1. Related Testing of Lithium Manganese Iron Phosphate Cathode Material
   The lithium manganese iron phosphate cathode materials provided in Examples A1 to A10 and Comparative Examples A1 to A2, and the first core-shell and second core-shell in Example A10 were characterized by SEM. The SEM images of the first core-shell and the first core-shell in Example A10 are shown in Part (a) and Part (c) of FIG. 3, respectively. It can be seen that the particle size of the first core-shell in Part (a) of FIG. 3 is relatively small, while the particle size of the second core-shell in Part (c) of FIG. 3 is relatively large. The SME image of the lithium manganese iron phosphate cathode material provided in Example A1 is shown in FIG. 4. It can be seen that the first core-shell structure and the second core-shell structure form a particle size grading between the large and small particles, which improves the spatial utilization of particle stacking, and increases the compaction density and volumetric capacity.
2. The particle sizes of the lithium manganese iron phosphate cathode materials provided in Examples A1 to A10 were measured using ImageJ software in scanning electron micrographs. The results for Example A10 are shown in Part (b) and Part (d) of FIG. 3. As can be seen from these figures, the particle size of the first particle is approximately 113 nm, and the particle size of the second particle is approximately 600 nm.
3. The compaction densities of the lithium manganese iron phosphate cathode materials provided in Examples A1 to A10 and Comparative Examples A1 to A2 were measured using a compaction density meter and results were recorded in Table 1. The capacity of the lithium-ion batteries provided in Examples B1 to B10 and Comparative Examples B1 to B2 was measured, and the capacity test results are recorded in Table 1.

**Table 1**

| Case/Parameter | Difference from Example A1 | Compaction density/g/cm³ | Resulting Battery Capacity/mAh/g |
|---|---|---|---|
| Example A1 | / | 2.56 | 156.45 |
| Example A2 | The Fe: Mn ratio of the first particle is 0.4: 0.595, and the ratio of the second particle is 0.495: 0.5. | 2.51 | 154.64 |
| Example A3 | The particle size of the first particle is 200 nm to 300 nm, and the particle size of the second particle is 800 nm to 1000 nm. | 2.45 | 148.17 |
| Example A4 | The mass ratio of the first particle to the second particle is 30: 70. | 2.34 | 151.3 |
| Example A5 | The first and second particles do not contain the doping element Ti, and the manganese-iron ratio of the first particle and the second particle is changed accordingly. | 2.54 | 152.53 |
| Example A6 | The first and second coating layers do not contain the doping element Zr. | 2.46 | 153.4 |
| Example A7 | The molar ratio of SP2-hybridized carbon atoms to SP3-hybridized carbon atoms is 8: 1. | 2.47 | 149.7 |
| Example A8 | No first or second coating layer. | 2.50 | 143.2 |
| Example A9 | No additive added in step S1. | 2.44 | 150.8 |
| Example A10 | Separate preparation of the first and second core-shells, followed by final mixing. | 2.55 | 155.9 |
| Comparative Example A1 | First core-shell only, no second core-shell. | 2.36 | 141.6 |
| Comparative Example A2 | Second core-shell only, no first core-shell. | 2.37 | 139.7 |

According to Table 1, compared with Comparative Examples A1 and A2, Examples A1 to A10 obtain first particle and second particle with different manganese-iron ratios and different particle sizes through precursors with different manganese-iron ratios, the manganese-iron ratio of the first particle is greater than or equal to 1, the manganese-iron ratio of the second particle is smaller than or equal to the manganese-iron ratio of the first particle, and the particle size of the first particle is smaller than or equal to the particle size of the second particle, thereby forming a particle size gradation and improving the compaction density and volumetric capacity.

The manganese-iron ratio of the first and second particles in Example A1 differs from that in Example A2. Example A1 exhibits higher compaction density and capacity, demonstrating that further controlling the manganese-iron ratio of the first and second particles within a certain range can help improve compaction density and capacity.

The particle sizes of the first and second particles in Example A1 differ from those in Example A3. Example A1 exhibits higher compaction density and capacity, demonstrating that further controlling the particle sizes of the first and second particles within a certain range can help improve compaction density and capacity.

The mass ratio of the first particle to the second particle in Example A1 differs from that in Example A4. Example A1 exhibits higher compaction density and capacity, demonstrating that further controlling the mass ratio of the first particle to the second particle within a certain range can help improve both compaction density and capacity.

In Example A1, the first and second particles contain the doping element M, while Example A5 does not contain the doping element M. Example A1 exhibits higher compaction density and capacity, demonstrating that doping the first and second particles with elements can improve both compaction density and capacity.

The shells in Example A1 all contain the doping element N, while Example A6 does not contain the doping element N. Example A1 exhibits higher compaction density and capacity, demonstrating that doping the shell with elements can help improve both density and capacity.

The ratio of SP2-hybridized carbon to SP3-hybridized carbon in the shell in Example A1 differs from that in Example A7. Example A1 exhibits higher compaction density and capacity, demonstrating that adjusting the carbon hybridization ratio in the shell can help improve both density and capacity.

Example A1 contains a coating layer, while Example A8 does not contain the coating layer. Example A1 exhibits higher compaction density and capacity, demonstrating that coating the particle surface to form a coating layer helps improve compaction density and capacity.

The preparation method of Example A1 includes additives in step S1, while Example A9 does not. Example A1 exhibits higher compaction density and capacity, demonstrating that adding additives during preparation of the mixture solution in step S1 helps improve compaction density and capacity.

The preparation method of Example A10 involves preparing the first core-shell and the second core-shell separately and then mixing them. This preparation method achieves similar final compaction density and capacity compared to the preparation method of Example A1 with improved preparation efficiency. Therefore, both preparation methods can improve compaction density and capacity.

The above are only optional examples of the present application and are not intended to limit the present application. For those skilled in the art, the present application may have various modifications and changes. Any modifications, equivalent substitutions, improvements, etc. made within the spirit and principles of the present application should be comprised in the scope of the claims of the present application.

## Claims

1. A lithium manganese iron phosphate cathode material, comprising:
a first lithium manganese iron phosphate particle, and
a second lithium manganese iron phosphate particle;
wherein
a molar ratio of Mn to Fe in the first lithium manganese iron phosphate particle is greater than or equal to 1;
a molar ratio of Mn to Fe in the second lithium manganese iron phosphate particle is smaller than or equal to the molar ratio of Mn to Fe in the first lithium manganese iron phosphate particle; and
a particle size of the first lithium manganese iron phosphate particle is smaller than or equal to a particle size of the second lithium manganese iron phosphate particle.

2. The lithium manganese iron phosphate cathode material according to claim 1, wherein
the first lithium manganese iron phosphate particle has a general chemical formula of Liₐ₁Fe_{b1}Mn_{c1}(PO₄)_{d1}, wherein 0.9 ≤ a1 ≤ 1.1, 0 < b1 ≤ 0.5, 0.5 ≤ c1<1, and 0.9 ≤ d1 ≤ 1.1; and/or
the molar ratio of the element Mn to Fe in the second lithium manganese iron phosphate particle is smaller than or equal to 1; and/or
the second lithium manganese iron phosphate particle has a general chemical formula of Liₐ₂Fe_{b2}Mn_{c2}(PO₄)_{d2}, wherein 0.9 ≤ a2 ≤ 1.1, 0.4 ≤ b2<1, 0 < c2 ≤ 0.6, and 1 ≤ d2 ≤ 1.1.

3. The lithium manganese iron phosphate cathode material according to claim 2, wherein
in the first lithium manganese iron phosphate particle, 0.2 ≤ b1 ≤ 0.4, 0.6 ≤ c1 ≤ 0.8; and/or
a1: (b1 + c1): d1 = 1-1.08: 0.95-1.05: 1; and/or
in the second lithium manganese iron phosphate particle, 0.5 ≤ b2 ≤ 0.8, 0.2 ≤ c2 ≤ 0.5;
and/or
a2: (b2 + c2): d2 = 1-1.08: 0.95-1.05: 1; and/or
in the lithium manganese iron phosphate cathode material, Mn accounts for 30% to 70% of a total molar amount of Mn and Fe.

4. The lithium manganese iron phosphate cathode material according to any one of claims 1-3, wherein
a mass ratio of the first lithium manganese iron phosphate particle to the second lithium manganese iron phosphate particle is 10: 90 to 70: 30; and/or
the particle size of the first lithium manganese iron phosphate particle is 20 nm to 350 nm; and/or
the particle size of the second lithium manganese iron phosphate particle is 300 nm to 800 nm.

5. The lithium manganese iron phosphate cathode material according to any one of claims 1-4, wherein
at least one of the first lithium manganese iron phosphate particle and the second lithium manganese iron phosphate particle further comprises a doping element M; and
a molar ratio of the doping element M in the first lithium manganese iron phosphate particle to phosphorus contained in the first lithium manganese iron phosphate particle is greater than 0 and smaller than or equal to 0.4: 1; and/or
a molar ratio of the doping element M in the second lithium manganese iron phosphate particle to phosphorus contained in the second lithium manganese iron phosphate particle is greater than 0 and smaller than or equal to 0.4: 1.

6. The lithium manganese iron phosphate cathode material according to any one of claims 1-5, wherein the doping element M comprises at least one of Ti, V, Cr, Co, Ni, Ca, Nb, Mg, Zr, In, Na, Al, Cd, and Sn.

7. The lithium manganese iron phosphate cathode material according to any one of claims 1-6, further comprising a first coating layer and a second coating layer, wherein the first coating layer is coated on the first lithium manganese iron phosphate particle, and the second coating layer is coated on the second lithium manganese iron phosphate particle.

8. The lithium manganese iron phosphate cathode material according to claim 7, wherein
a thickness of the first coating layer and a thickness of the second coating layer are the same or different, and range from 1 nm to 10 nm, respectively; and/or
at least one of the first coating layer and the second coating layer comprises carbon.

9. The lithium manganese iron phosphate cathode material according to any one of claims 7-8, wherein
a material of at least one of the first coating layer and the second coating layer further comprises a doping element N; and/or
a mass of carbon accounts for 1% to 3% by mass of the lithium manganese iron phosphate cathode material; and/or
a hybridization mode of carbon comprises at least one of SP2 hybridization and SP3 hybridization.

10. The lithium manganese iron phosphate cathode material according to claim 9, wherein
the doping element N comprises at least one of Ti, V, Cr, Co, Ni, Ca, Nb, Mg, Zr, In, Na, Al, Cd, and Sn; and/or
a content of the doping element N in the first coating layer or the second coating layer is 0.01% to 4%; and/or
the hybridization mode of carbon in the first coating layer or the second coating layer comprises the SP2 hybridization and the SP3 hybridization, and a molar ratio of a SP2-hybridized carbon to a SP3-hybridized carbon is greater than 0 and smaller than or equal to 5: 1.

11. A preparation method of a lithium manganese iron phosphate cathode material, comprising the following steps:
subjecting a first lithium manganese iron phosphate precursor particle and a second lithium manganese iron phosphate precursor particle to a first mixing treatment to obtain a first mixture precursor; and
subjecting the first mixture precursor to a first sintering treatment in a first protective gas atmosphere to obtain a first sintered product, wherein the first sintered product comprises a first lithium manganese iron phosphate particle and a second lithium manganese iron phosphate particle;
wherein
a molar ratio of Mn to Fe in the first lithium manganese iron phosphate precursor particle is greater than or equal to 1;
a molar ratio of Mn to Fe in the second lithium manganese iron phosphate precursor particle is smaller than or equal to the molar ratio of Mn to Fe in the first lithium manganese iron phosphate precursor particle; and
a particle size of the first lithium manganese iron phosphate particle is smaller than or equal to a particle size of the second lithium manganese iron phosphate particle.

12. The preparation method according to claim 11, wherein
the preparation method of the first lithium manganese iron phosphate precursor particle comprises the following steps:
preparing a first mixed solution comprising a first lithium source, a first manganese source, a first iron source, and a first phosphate source, and adding a first carbon source for precipitation to obtain the first lithium manganese iron phosphate precursor particle; and/or
the preparation method of the second lithium manganese iron phosphate precursor particle comprises the following steps:
preparing a second mixed solution comprising a second lithium source, a second manganese source, a second iron source, and a second phosphate source, and adding a second carbon source for precipitation to obtain the second lithium manganese iron phosphate precursor particle.

13. The preparation method according to claim 12, wherein
the first carbon source comprises at least one of a polyethylene glycol, hexadecyltrimethylammonium bromide, ethylene glycol, a polyvinyl pyrrolidone, triethanolamine, salicylic acid, ethanol, methanol, citric acid, glucose, sucrose, a soluble starch, oxalic acid, tartaric acid, fatty acid glyceride, and an amino acid; and/or
the first carbon source is added according to a content of the first carbon source accounting for 1% to 12% of a theoretical mass of the first lithium manganese iron phosphate particle; and/or
the second carbon source is added according to a content of the second carbon source accounting for 1% to 12% of a theoretical mass of the second lithium manganese iron phosphate particle; and/or
in at least one of the step of preparing the first mixed solution and the step of preparing the second mixed solution, at least one of a source of doping element M and an additive is further added; and/or
in the step of preparing the first mixed solution, the first lithium source, the first manganese source, the first iron source, and the first phosphate source are added in a molar ratio of Li contained in the first lithium source: a sum of Mn contained in the first manganese source and Fe contained in the first iron source: P contained in the first phosphate source, that is, Li: (Mn + Fe): P being 1-1.08: 0.95-1.05: 1.

14. The preparation method according to claim 13, wherein
in the step of preparing the first mixed solution, the source of doping element M is added according to a molar ratio of a doping element M to element P contained in the first phosphate source being greater than 0 and smaller than or equal to 0.4: 1; and/or
in the step of preparing the second mixed solution, the source of doping element M is added according to a molar ratio of the doping element M to element P contained in the second phosphate source being greater than 0 and smaller than or equal to 0.4: 1; and/or
the additive comprises at least one of polyethylene glycol, hexadecyltrimethylammonium bromide, ethylene glycol, and ethylenediaminetetraacetic acid; and/or
in the step of preparing the first mixed solution, the additive is added according to a content of the additive accounting for 1% to 20% of the theoretical mass of the first lithium manganese iron phosphate particle; and/or
in the step of preparing the second mixed solution, the additive is added according to a content of the additive accounting for 1% to 20% of the theoretical mass of the second lithium manganese iron phosphate particle.

15. The preparation method according to any one of claims 11-14, wherein
the first protective gas comprises at least one of N₂, Ar, methane, and ethanol; and/or
the first sintering treatment comprises at least one of the following conditions (1) to (3):
(1) a first sintering treatment temperature is 200°C to 750°C;
(2) a temperature is increased to the first sintering treatment temperature at a heating rate of 1°C/min to 10°C/min; and
(3) a holding time of the first sintering treatment temperature is 10 hrs to 25 hrs.

16. The preparation method according to any one of claims 11-15, after the first sintering treatment, further comprising the following steps:
subjecting the first sintered product and a third carbon source to a second mixing treatment to obtain a second mixture precursor; and
subjecting the second mixture precursor to a second sintering treatment in a second protective gas atmosphere.

17. The preparation method according to claim 16, wherein
the third carbon source comprises at least one of at least one of a polyethylene glycol, hexadecyltrimethylammonium bromide, ethylene glycol, a polyvinyl pyrrolidone, triethanolamine, salicylic acid, ethanol, methanol, citric acid, glucose, sucrose, a soluble starch, oxalic acid, tartaric acid, fatty acid glyceride, and an amino acid; and/or
the third carbon source is subjected to the second mixing treatment according to a mass ratio of the third carbon source to the first sintered product of 1: 99 to 15: 85; and/or
the second protective gas comprises at least one of N₂, Ar, methane, and ethanol; and/or
in the second mixing treatment step, a source of doping element N is further added to the first sintered product and the third carbon source; and/or
the second sintering treatment comprises at least one of the following conditions (1) to (3):
(1) a second sintering treatment temperature is 500°C to 800°C;
(2) a temperature is raised to the second sintering treatment temperature at a heating rate of 1°C/min to 10°C/min; and
(3) a holding time of the second sintering treatment temperature is 10 hrs to 25 hrs.

18. The preparation method according to claim 17, wherein the source of doping element N is added according to a mass ratio of the source of doping element N to the first sintered product of 0.01% to 5%.

19. A cathode plate, comprising: a current collector, and a cathode active layer bonded to the current collector;
wherein
the cathode active material contained in the cathode active layer comprises the lithium manganese iron phosphate cathode material according to any one of claims 1-10 or the lithium manganese iron phosphate cathode material prepared by the preparation method according to any one of claims 11-18.

20. A secondary battery, comprising: a cathode plate and an anode plate; wherein the cathode plate comprises the cathode plate according to claim 19.
